# EUROPEAN PATENT APPLICATION

(11) **EP 4 512 755 A1**
(43) Date of publication of application: **26.02.2025**
(21) Application number: 22943526.8
(22) Date of filing: 24.11.2022
(51) Int. Cl.: B65G 47/88, G01N 35/00

(54) **TEST TUBE ROTATING MECHANISM, AND FLOW-LINE SAMPLE DELIVERY SYSTEM**

(30) Priority: 27.05.2022 CN 202210597710
(71) Applicant: Zybio Inc., Chongqing 400082 (CN)
(72) Inventor: SHENG, Yang, Chongqing 400082 (CN); YUAN, Jinnan, Chongqing 400082 (CN); LIU, Heng, Chongqing 400082 (CN); WANG, Qi, Chongqing 400082 (CN)
(74) Representative: 2K Patentanwälte Blasberg Kewitz & Reichel
(86) International application number: PCT/CN2022/133906
(87) International publication number: WO 2023/226339

(57) **Abstract**

The present application discloses a test tube rotating mechanism and a production-line sample conveying system. The test tube rotating mechanism includes: a first rolling structure and a second rolling structure, where the first rolling structure and the second rolling structure are distributed along the conveying direction of a conveying track, each of the outer side surfaces of the first rolling structure and the second rolling structure has a tangent point with the peripheral wall of any test tube holder on the conveying track to limit the movement of the test tube holder, and the rolling of the first rolling structure and the second rolling structure relative to the test tube holder cause the test tube holder to rotate; and a transmission structure, where the transmission structure drives the first rolling structure and the second rolling structure to move away from and approach the conveying track.

## Description

### TECHNICAL FIELD

The application relates to the technical field of medical instruments, and in particular to a test tube rotating mechanism and a production-line sample conveying system using the test tube rotating mechanism.

### BACKGROUND

In the conventional technique where a test tube rack with multiple insertion holes is used and test tubes are inserted into the test tube rack in batches, the test tube rack is rotated or the test tubes on the test tube rack are rotated one by one using a tube rotating device so that a barcode scanner can scan and read the sample information on the outer wall of the test tube. As can be seen from the above content, in the conventional technique, only a stationary test tube or test tube rack can be rotated.

As for the test tube holders and the test tubes arranged on the production line, specifically, each test tube is correspondingly inserted into a test tube holder, the main body of the test tube holder is a cylinder, and a hole or a fastening sleeve is provided on the test tube holder for fixing the test tube. Multiple test tube holders are placed on the conveying track on the production line and conveyed forward to the workstation of subsequent operating equipment. A conveying belt is provided on the conveying track to continuously convey the test tube holders. When the test tube holder passes the barcode scanner workstation, the test tube holder is manually intercepted and rotated for the barcode scanner to scan the test tube information thereon.

This type of structural configuration requires cumbersome manual operations and has a low degree of automation.

### SUMMARY

The object of the present application is to provide a test tube rotating mechanism that can automatically intercept and rotate a test tube holder conveyed on a conveying track and a test tube on the test tube holder.

To achieve the above-mentioned purpose, the test tube rotating mechanism proposed in the present application is applied to the production-line sample conveying system and includes: a first rolling structure and a second rolling structure, where the first rolling structure and the second rolling structure are distributed along a conveying direction of a conveying track, each of outer side surfaces of the first rolling structure and the second rolling structure has a tangent point with a peripheral wall of any test tube holder on the conveying track to limit movement of the test tube holder, and rolling of the first rolling structure and the second rolling structure relative to the test tube holder cause the test tube holder to rotate; and a transmission structure, where the transmission structure drives the first rolling structure and the second rolling structure to move away from and approach the conveying track.

In one or more embodiments, the mechanism further includes a blocking structure, where the blocking structure is used to separate two adjacent test tube holders on the conveying track, and each of the first rolling structure and the second rolling structure has a tangent point with a peripheral wall of a previous one of two separated test tube holders, so as to limit the movement of the previous test tube holder; and the transmission structure drives the blocking structure to move away from and approach the conveying track.

In one or more embodiments, the blocking structure is a third rolling structure.

In one or more embodiments, the mechanism further includes a frame and a swinging bracket, where the frame is provided with a rotating shaft, an axis of the rotating shaft is perpendicular to a horizontal ground, the swinging bracket is connected to the rotating shaft, and the first rolling structure, the second rolling structure, the transmission structure, and the blocking structure are provided on the swinging bracket; the conveying track has a left side and a right side in a horizontal direction, and the swinging bracket, the first rolling structure, the second rolling structure, and the blocking structure are located on the left side; the transmission structure includes a driving motor, a first transmission shaft, and a cam, the first transmission shaft is connected to the driving motor, the first transmission shaft is perpendicular to the horizontal ground, and the cam is connected to the first transmission shaft; and when a flange of the cam abuts against a surface of the frame, the swinging bracket swings in the horizontal direction, so that the first rolling structure, the second rolling structure, and the blocking structure move away from the conveying track.

In one or more embodiments, an optical coupling sensor is provided on the frame, and an optocoupler is provided on a base circle of the cam.

In one or more embodiments, the first rolling structure is connected to the first transmission shaft; the swinging bracket is provided with a second transmission shaft, the second transmission shaft is parallel to the first transmission shaft, and the second rolling structure is connected to the second transmission shaft; and the first transmission shaft is provided with a driving pulley, the second transmission shaft is provided with a driven pulley, and the driving pulley and the driven pulley are connected by a first transmission belt.

In one or more embodiments, the mechanism further includes an elastic structure, and two ends of the elastic structure are respectively connected to the frame and the swinging bracket.

In one or more embodiments, the mechanism further includes an auxiliary support, where the auxiliary support is located on the right side, the auxiliary support is provided with a fourth rolling structure, and an outer side surface of the fourth rolling structure has a tangent point with the test tube holder.

In one or more embodiments, a position sensor probe is provided on the auxiliary support.

The present application also provides a production-line sample conveying system including a barcode scanner and the test tube rotating mechanism as mentioned above.

In practical applications, the test tube rotating mechanism in the present application can be used in combination with an existing conveying track. A first rolling structure and a second rolling structure are arranged along the conveying direction so that the test tube holder can be limited between the first rolling structure and the second rolling structure. Driven by the rolling structure, the test tube holder and the test tube thereon can also rotate, and scanning can be performed. After rotation, the transmission structure drives the first rolling structure and the second rolling structure away from the conveying track to release the scanned test tube holder. The transmission structure can also drive the first rolling structure and the second rolling structure to reset, so as to intercept the test tube holder for subsequent conveying and control the rotation of the test tube holder. In the present application, the first rolling structure and the second rolling structure are arranged along the conveying direction of the track, and the test tube holder is limited and abutted against from the front and back directions. When the rotation of the test tube holder is under control, the test tube holder does not have any lateral swing or lateral displacement, so the test tube holder has good stability during the rotation process. This type of structural can directly intercept and rotate the moving test tube holder without changing the original movement path of the test tube holder, further improving the stability of the test tube holder (an unstable test tube holder will cause the test tube thereon to topple over and fall), and has a simple and sophisticated structure, with precise positioning, easy operation, extremely low use cost, and extremely high practical value.

### BRIEF DESCRIPTION OF DRAWINGS

In order to more clearly illustrate the embodiments of the present application or the technical solutions in the conventional technique, the drawings required for use in the embodiments or the description of the conventional technique will be briefly introduced below. The drawings described below are only some embodiments of the present application. For ordinary technicians in this field, other drawings can be obtained based on the structures shown in these drawings without putting in creative effort.
FIG. 1 is a schematic diagram of a three-dimensional structure of an embodiment of a test tube rotating mechanism of the present application;
FIG. 2 is a top view of an embodiment of a test tube rotating mechanism of the present application;
FIG. 3 is a top view of an embodiment of a test tube rotating mechanism of the present application;
FIG. 4 is a top view of an embodiment of a test tube rotating mechanism of the present application;
FIG. 5 is a schematic diagram of a three-dimensional structure of an embodiment of a test tube rotating mechanism of the present application;
FIG. 6 is a schematic diagram of a three-dimensional structure of a frame in an embodiment of a test tube rotating mechanism of the present application;
FIG. 7 is a schematic diagram of a three-dimensional structure of a swinging bracket in an embodiment of a test tube rotating mechanism of the present application;
FIG. 8 is a schematic diagram of a three-dimensional structure of a first transmission shaft of a transmission structure in an embodiment of a test tube rotating mechanism of the present application; and
FIG. 9 is a schematic diagram of a three-dimensional structure of a second transmission shaft of a transmission structure in an embodiment of a test tube rotating mechanism of the present application.

### Description of Reference Numbers:

| Name | Number | Name | Number |
|---|---|---|---|
| First rolling structure | 1 | Swinging bracket | 6 |
| Second rolling structure | 2 | Second transmission shaft | 61 |
| Transmission structure | 3 | Driven pulley | 611 |
| Driving motor | 31 | First transmission belt | 612 |
| First transmission shaft | 32 | Second transmission belt | 613 |
| Cam | 321 | Elastic structure | 7 |
| Optocoupler | 3211 | Auxiliary support | 8 |
| Driving pulley | 322 | Fourth rolling structure | 81 |
| Blocking structure | 4 | Position sensor probe | 82 |
| Frame | 5 | Conveyor track | 100 |
| Rotating bearing structure | 51 | Test tube holder | 200 |
| Optical coupling sensor | 52 | Barcode scanner | 300 |
| Shaft | 53 | | |

The objectives, functional characteristics, and advantages of the present application will be further explained in conjunction with the embodiments, with reference to the accompanying drawings.

### DESCRIPTION OF EMBODIMENTS

The technical solutions in the embodiments of the present application will be described clearly and completely hereinafter in combination with the drawings in the embodiments of the present application. The described embodiments are only part of the embodiments of the present application, not all of the embodiments. Based on the embodiments of the present application, all other embodiments obtained by ordinary technicians in this field without creative work are within the scope of protection of the present application.

It should be noted that all directional indications (such as up, down, left, right, front, back, etc.) in the embodiments of the present application are only used to explain the relative position relationship, movement status, etc. between the components under a certain specific posture (as shown in the accompanying drawings). If the specific posture changes, the directional indication will also change accordingly.

In addition, the descriptions of "first", "second", etc. in the present application are only used for descriptive purposes and cannot be understood as indicating or implying their relative importance or implicitly indicating the number of the indicated technical features. Therefore, the features defined as "first" and "second" may explicitly or implicitly include at least one of the features. In addition, the technical solutions between the various embodiments can be combined with each other, but they must be based on the ability of ordinary technicians in the field to implement them. When the combination of technical solutions is contradictory or cannot be implemented, it should be deemed that such a combination of technical solutions does not exist and is not within the scope of protection required by the present application.

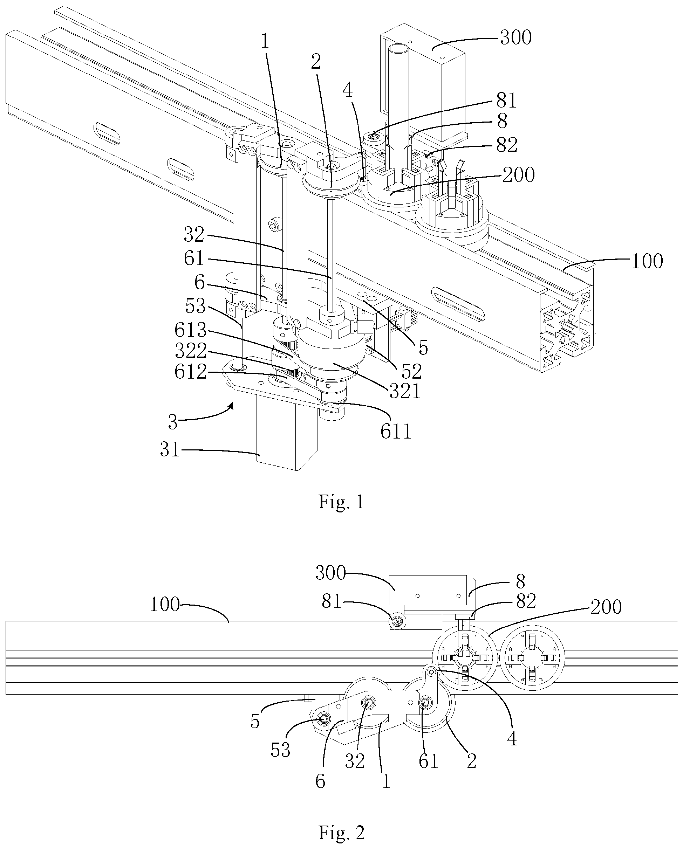

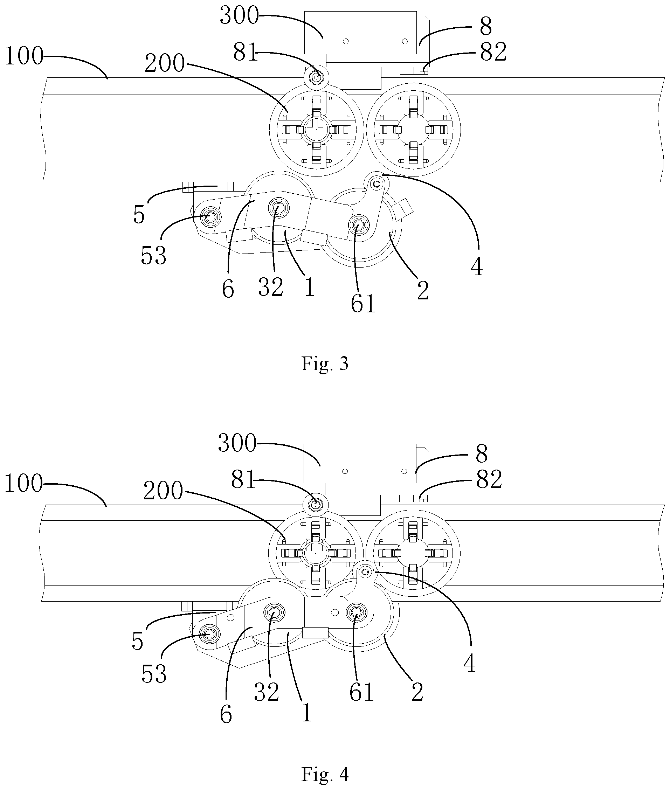

In one or more embodiments of the present application, a test tube rotating mechanism, which is applied to a production-line sample conveying system, includes: a first rolling structure 1 and a second rolling structure 2, where the first rolling structure 1 and the second rolling structure 2 are distributed along the conveying direction of a conveying track 100, each of the outer side surface of the first rolling structure 1 and the outer side surface of the second rolling structure 2 has a tangent point with the peripheral wall of any test tube holder 200 on the conveying track 100 to limit the movement of the test tube holder 200, and the rolling of the first rolling structure 1 and the second rolling structure 2 relative to the test tube holder 200 makes the test tube holder 200 rotate; and a transmission structure 3, where the transmission structure 3 drives the first rolling structure 1 and the second rolling structure 2 away from and close to the conveying track 100. As shown in FIGS. 1 to 4.

In one or more embodiments, the test tube rotating mechanism in the present application may be used in combination with the existing conveying track 100 and a barcode scanner 300. The first rolling structure 1 and the second rolling structure 2 are provided along the conveying direction so that the test tube holder 200 is limited between the first rolling structure 1 and the second rolling structure 2. Driven by the rolling structures, the test tube holder 200 and the test tube thereon can also rotate, and scanning can be performed. After rotation, the transmission structure 3 drives the first rolling structure 1 and the second rolling structure 2 away from the conveying track 100, so as to release the scanned test tube holder 200. The transmission structure 3 can also drive the first rolling structure 1 and the second rolling structure 2 back to their original positions, so as to intercept a subsequently conveyed test tube holder 200 and control the rotation of the subsequently conveyed test tube holder 200. In one or more embodiments of the present application, the first rolling structure 1 and the second rolling structure 2 are arranged along the conveying direction of the track, and the test tube holder 200 is limited and pressed against from the front and rear directions. The two rolling structures and the test tube holder 200 abut against each other based on the tangent principle. The two rolling structures are driving transmission structures 3. When the test tube holder 200 is controlled to rotate, the test tube holder 200 does not swing or shift sideways, so the test tube holder 200 has good stability during the rotation process. In one or more embodiments, the first rolling structure 1 and the second rolling structure 2 have the same rotation speed, and there will be no differential rotation to ensure the rotation stability of the test tube holder 200. This type of structural configuration can directly intercept and rotate the moving test tube holder 200. On the other hand, the two rolling structures and the test tube holder 200 abut against each other based on the tangent principle, which will not change the original movement path of the test tube holder 200, further improving the stability of the test tube holder 200 (the instability of the test tube holder 200 will cause the test tube thereon to fall), and the structure is simple and exquisite, the positioning is accurate, and it is easy to operate, with relatively low use cost and relatively high practical value. In one or more embodiments, the first rolling structure 1 and the second rolling structure 2 are roller structures. In one or more embodiments, along the conveying direction of the track from right to left, guards are provided on the left and right sides of the conveying track 100 (taking a person walking from right to left as an example, the left side of the conveying track is located on the left-hand side of the person, and the right side of the conveying track is located on the right-hand side of the person), to prevent the test tube holder 200 from falling, and the height of the test tube holder 200 is higher than the height of the guard, so that most of the body of the test tube holder 200 protrudes from the guard and the conveying track 100. As a result, the two rolling structures can be tangent to the peripheral wall of the test tube holder 200.

The technical solution of the present application further includes a blocking structure 4, which is used to separate two adjacent test tube holders 200 on the conveying track 100, and each of the first rolling structure 1 and the second rolling structure 2 has a tangent point with the peripheral wall of the previous one of two separated test tube holders 200, so as to limit the movement of the test tube holder 200. The transmission structure 3 drives the blocking structure 4 away from and close to the conveying track 100. As shown in FIGS. 1 to 4.

In one or more embodiments, if the interval of multiple test tube holders 200 on the conveying track 100 is small or the multiple test tube holders 200 push against each other, the rotation of the previous test tube holder 200 will be interfered with. In one or more embodiments, taking the conveying track 100 conveying the test tube holder 200 from right to left as an example, the first rolling structure 1 and the second rolling structure 2 respectively limit and rotate the previous test tube holder 200 in the front and rear directions. If the subsequent test tube holder 200 pushes against the previous test tube holder 200 to generate friction, the rotation efficiency of the previous test tube holder 200 will be affected. If the subsequent test tube holder 200 is close to the second rolling structure 2 and friction occurs, the rotation efficiency and rotation stability of the test tube holder 200 will also be affected. The test tube holder 200 may shift sideways due to the rotational differential between the first rolling structure 1 and the second rolling structure 2. In order to solve the above technical problems, the present application also includes a blocking structure 4 used to separate the two adjacent test tube holders 200 on the conveying track 100. Each of the first rolling structure 1 and the second rolling structure 2 has a tangent point with the peripheral wall of the previous one of two separated test tube holders 200 to limit the movement of this test tube holder 200. The transmission structure 3 drives the blocking structure 4 away from and close to the conveying track 100. In one or more embodiments, the blocking structure 4 is close to the tangent point between the two adjacent test tube holders 200 and is tangent to the subsequent test tube holder 200 to block the test tube holder 200. In one or more embodiments, the transmission structure 3 drives the first rolling structure 1, the second rolling structure 2, and the blocking structure 4 to move simultaneously toward the conveying track 100 to reach the preset position.

In one or more embodiments of the present application, the blocking structure 4 is a third rolling structure.

In one or more embodiments, along the conveying direction from right to left on the track, when the previous test tube holder 200 is sensed at the preset workstation, the transmission structure 3 drives the first rolling structure 1, the second rolling structure 2, and the blocking structure 4 to move away from the conveying track 100, to releases the test tube holder 200, and the conveying track 100 continues to convey the test tube holder 200 forward. During the conveying process, the transmission structure 3 drives the blocking structure 4, the first rolling structure 1, and the second rolling structure 2 to gradually approach the test tube holder 200, and makes the third rolling structure abut against and roll with the peripheral wall of the previous test tube holder 200. When the blocking structure 4 approaches the tangent point of two adjacent test tube holders 200 and becomes separated from the previous test tube holder 200 and tangent to the next test tube holder 200 to achieve a blocking effect, each of the first rolling structure 1 and the second rolling structure 2 has a tangent point with the peripheral wall of the previous of two separated test tube holders 200 to limit and rotate the previous test tube holder 200.

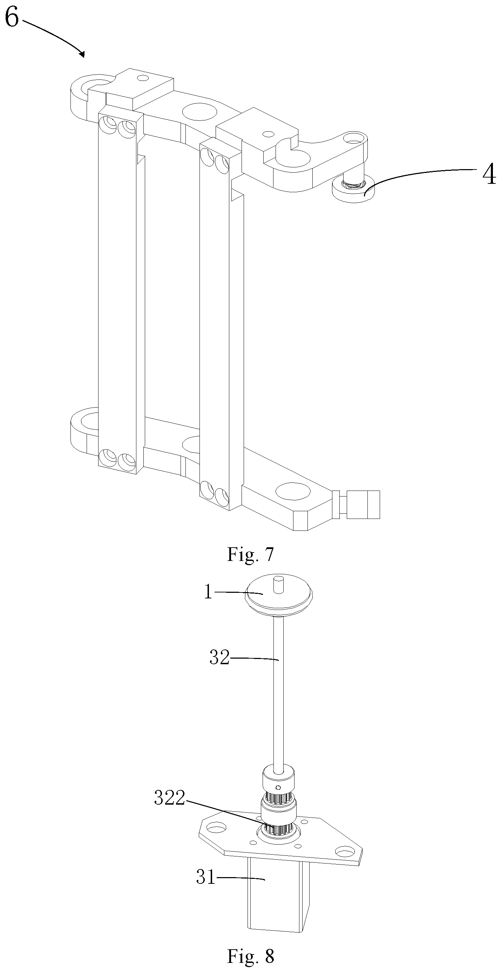

In one or more embodiments, the technical solution of the present application further includes a frame 5 and a swinging bracket 6. The frame 5 is provided with a rotating shaft 53. The axis of the rotating shaft 53 is perpendicular to the horizontal ground. The swinging bracket 6 is connected to the rotating shaft 53. The first rolling structure 1, the second rolling structure 2, the transmission structure 3, and the blocking structure 4 are all arranged on the swinging bracket 6. The conveying track 100 has a left side and a right side in the horizontal direction. The swinging bracket 6, the first rolling structure 1, and the second rolling structure 2 are located on the left side. The transmission structure 3 includes a driving motor 31, a first transmission shaft 32, and a cam 321. The first transmission shaft 32 is connected to the driving motor 31. The first transmission shaft 32 is perpendicular to the horizontal ground. The cam 321 is connected to the first transmission shaft 32. When the flange of the cam 321 abuts the surface of the frame 5, the swinging bracket 6 swings in the horizontal direction, so that the first rolling structure 1, the second rolling structure 2, and the blocking structure 4 are away from the conveying track 100. As shown in FIGS. 1 to 7.

In one or more embodiments, along the conveying direction from right to left, the conveying track 100 has a left side and a right side in the horizontal direction. The frame 5 can be fixedly connected to the conveying track 100 or independently arranged. The driving motor 31 drives the first transmission shaft 32 to rotate, and the first transmission shaft 32 drives the cam 321 to rotate horizontally. When the flange of the cam 321 abuts the surface of the frame 5, the swinging bracket 6 is pushed away and swings in the horizontal direction (which can be understood as the action state of sliding doors and windows), to make the first rolling structure 1, the second rolling structure 2, and the blocking structure 4 move away from the left side of the conveying track 100. When the flange passes and moves away from the surface of the frame 5, the swinging bracket 6 is reset, so that the first rolling structure 1, the second rolling structure 2, and the blocking structure 4 approach the conveying track 100. When the cam 321 rotates, the base circle of the cam 321 can always abut against the frame 5. When the flange of the cam 321 abuts against the surface of the frame 5, the swinging bracket 6 is pushed away. When the swinging bracket 6 is reset, the base circle of the cam 321 abuts against the frame 5 and rotates. As described above, during the track conveying process, when the previous test tube holder 200 is sensed at the preset workstation, the transmission structure 3 operates, that is, when the flange of the cam 321 contacts the frame 5, the swinging bracket 6 is forced to be pushed away, so that the first rolling structure 1, the second rolling structure 2, and the third rolling structure move away from the left side of the conveying track 100 to release the test tube holder 200, and the conveying track 100 continues to convey the test tube holder 200 forward. During the conveying process, the cam 321 continues to rotate. When the flange passes and moves away from the surface of the frame 5, the swinging bracket 6 is reset, so that the first rolling structure 1, the second rolling structure 2, and the blocking structure 4 move close to the conveying track 100, and each of the first rolling structure 1 and the second rolling structure 2 has a tangent point with the peripheral wall of the separated previous test tube holder 200 to limit the movement and rotation of this test tube holder 200 so that the third rolling structure becomes separated from the previous test tube holder 200 and becomes tangent to the subsequent test tube holder 200 to achieve a blocking effect. At this time, the two rolling structures drive the test tube holder 200 to rotate, so that a scanner 300 recognizes the sample information of the test tube on the test tube holder 200. At this point, an action cycle ends. Since the cam 321 continues to rotate, when the swinging bracket 6 is pushed away again, the rotated test tube holder 200 is released and the next test tube holder 200 is allowed to enter the corresponding workstation, and the above-mentioned limiting, rotating, and scanning tasks are repeated, which will not be repeated in this article. In one or more embodiments, in order to increase the passing ability of the flange of the cam 321, a rotating bearing structure 51 can be set at a preset position of the frame 5. When the flange contacts the outer ring of the bearing of the rotating bearing structure 51, the two roll relative to each other, reducing the friction between the structures and increasing the passing ability of the flange of the cam 321. When the cam 321 rotates, the base circle of the cam 321 can always abut against the bearing structure 51. When the flange of the cam 321 abuts against the surface of the bearing structure 51, the swinging bracket 6 is pushed away. When the swinging bracket 6 is reset, the base circle of the cam 321 abuts against the bearing structure 51 and rotates again. It is worth adding that the linear speeds of the outer edges of the first rolling structure 1 and the second rolling structure 2 are consistent, and during the rotation of the cam 321, the rotation range of the test tube holder 200 and the test tube thereon is sufficient for the barcode scanner 300 to identify the barcode. In summary, under the action of the cam 321, the swinging bracket 6 drives the first rolling structure 1 and the second rolling structure 2 to move in the horizontal direction, so that the test tube holder 200 is quickly and stably limited between the first rolling structure 1 and the second rolling structure 2 and abuts against them.

In one or more embodiments of the present application, an optical coupling sensor 52 is arranged on the frame 5, and an optocoupler 3211 is arranged on the base circle of the cam 321.

In this type of structural configuration, the cam 321 rotates, causing the swinging bracket 6 to move away and reset, and the optical coupler thereon triggers the signal of the optical coupling sensor 52, which is used to record and process the starting point and ending point of the above-mentioned action cycle. This facilitates digital management and application and increases the accuracy of the structural action.

In one or more embodiments of the present application, the first rolling structure 1 is connected to the first transmission shaft 32; a second transmission shaft 61 is arranged on the swinging bracket 6, the second transmission shaft 61 is parallel to the first transmission shaft 32, and the second rolling structure 2 is connected to the second transmission shaft 61; a driving pulley 322 is arranged on the first transmission shaft 32, a driven pulley 611 is arranged on the second transmission shaft 61, and the driving pulley 322 and the driven pulley 611 are connected by a first transmission belt 612.

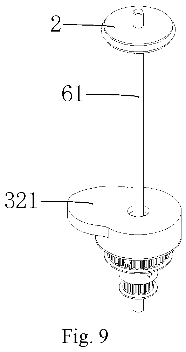

In one or more embodiments, the first rolling structure 1 and the second rolling structure 2 can be roller structures, which are respectively connected to the first transmission shaft 32 and the second transmission shaft 61. Under the action of the first transmission belt 612, a driving motor 31 can simultaneously drive the first rolling structure 1 and the second rolling structure 2 to rotate, and at the same time drive the cam 321 to rotate to realize the swinging effect of the swinging bracket 6, so that the limiting, rotation and release actions of the overall structure can be realized in an orderly manner, and a high degree of automated control is achieved using a purely mechanical structure, which has relatively low use cost and relatively high practical value. As shown in FIGS. 1, 5, 8, and 9, the cam 321 can also be arranged on the second transmission shaft 61, but not directly connected to the driving motor 31. A driving gear (not shown in the figures) is installed on the first transmission shaft 32, a driven gear (not shown in the figures) is integrally arranged at the bottom of the cam 321, and the driven gear part is connected to the driving gear through the second transmission belt 613. In this type of structural configuration, the cam 321 is not fixedly connected to the second transmission shaft 61, and any transmission ratio can be designed, and a smaller driving component can be used, which has a size advantage when a larger volume of the test tube holder 200 is driven. The first rolling structure 1 is directly connected to the driving motor 31, which ensures the stability of the rolling structure and prevents the test tube holder 200 from shifting sideways. In one or more embodiments, the first transmission shaft 32 and the second transmission shaft 61 are both fixed to the swinging bracket 6 through bearing structures, and the bearing structures are used to support the rotation of the two transmission shafts. Similarly, the rotating shaft 53 is also installed on the frame 5 and the swinging bracket 6 through bearing structures.

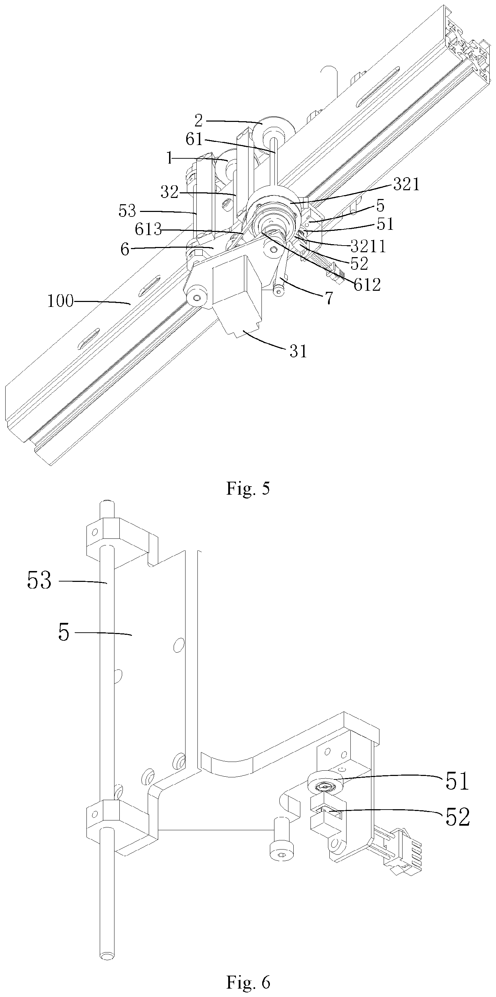

In one or more embodiments, the technical solution of the present application further includes an elastic structure 7, and two ends of the elastic structure 7 are respectively connected to the frame 5 and the swinging bracket 6. As shown in FIG. 5.

In one or more embodiments, the elastic structure 7 is connected between the swinging bracket 6 and the frame 5 to achieve a good bracket resetting effect. On the other hand, the swinging bracket 6 has different opening and closing angles under the action of the elastic structure 7. The elastic structure 7 provides elastic pressure for the first rolling structure 1, the second rolling structure 2, and the blocking mechanism, and can be used to abut the test tube holder 200 with different diameters, thereby increasing the versatility of the present application. In one or more embodiments, the elastic structure 7 is a tension spring.

In one or more embodiments, the technical solution of the present application further includes an auxiliary support 8. The auxiliary support 8 is located on the right side. The auxiliary support 8 is provided with a fourth rolling structure 81. The outer side surface of the fourth rolling structure 81 has a tangent point with the test tube holder 200. As shown in FIGS. 1 to 4.

As described above, the two rolling structures are driving transmission structures 3. When the test tube holder 200 is controlled to rotate, the test tube holder 200 does not have any lateral swing or lateral displacement, so the test tube holder 200 has good stability during the rotation process. In one or more embodiments, a fourth rolling structure 81 is arranged on the right side of the conveying track 100. The fourth rolling structure 81 is also rollable and tangent to the test tube holder 200. The fourth rolling structure 81 together with the first rolling structure 1 and the second rolling structure are used to limit and abut the surface of the test tube holder 200. The fourth rolling structure 81 can rotate freely. The lines connecting the centers of the circles of the fourth rolling structure 81, the first rolling structure 1, and the second rolling structure form a triangle, which may increase the stability of the rotation of the test tube holder 200. The barcode scanner 300 can be arranged on the auxiliary support 8. The auxiliary support 8 can be fixed on the conveying track 100 or arranged independently.

In one or more embodiments of the present application, a position sensor probe 82 is provided on the auxiliary support 8.

When the position sensor probe 82 detects the arrival of the test tube holder 200 and sends a signal, the motor 31 is then driven to operate, and the first rolling structure 1, the second rolling structure 2, and the cam 321 are controlled to operate, so as to achieve the above operation, which will not be described in detail herein. In one or more embodiments, the position sensor probe 82 is an infrared sensor probe.

The present application also proposes a production-line sample conveying system, including a barcode scanner 300 and a test tube rotating mechanism. For the specific structure of the test tube rotating mechanism, please refer to the above-mentioned embodiments. Since the present production-line sample conveying system adopts all the technical solutions of all the above-mentioned embodiments, it has at least one of the beneficial effects brought by the technical solutions of the above-mentioned embodiments, which will not be described one by one here.

The above description is only a preferred embodiment of the present application and does not limit the patent scope of the present application. All equivalent structural changes made by using the contents of the present application specification and drawings under the inventive concept of the present application, or directly/indirectly applied in other related technical fields are included in the patent protection scope of the present application.

## Claims

1. A test tube rotating mechanism, applied to a production-line sample conveying system, comprising:
a first rolling structure and a second rolling structure, wherein the first rolling structure and the second rolling structure are distributed along a conveying direction of a conveying track, each of outer side surfaces of the first rolling structure and the second rolling structure has a tangent point with a peripheral wall of any test tube holder on the conveying track to limit movement of the test tube holder, and rolling of the first rolling structure and the second rolling structure relative to the test tube holder causes the test tube holder to rotate; and
a transmission structure, wherein the transmission structure is configured to drive the first rolling structure and the second rolling structure to move away from and approach the conveying track.

2. The test tube rotating mechanism according to claim 1, further comprising a blocking structure, wherein
the blocking structure is configured to separate two adjacent test tube holders on the conveying track, and each of the first rolling structure and the second rolling structure has a tangent point with a peripheral wall of a previous test tube holder of two separated test tube holders, so as to limit the movement of the previous test tube holder; and
the transmission structure is configured to drive the blocking structure to move away from and approach the conveying track.

3. The test tube rotating mechanism according to claim 2, wherein the blocking structure is a third rolling structure.

4. The test tube rotating mechanism according to claim 2, further comprising a frame and a swinging bracket, wherein
the frame is provided with a rotating shaft, an axis of the rotating shaft is perpendicular to a horizontal ground, the swinging bracket is connected to the rotating shaft, and the first rolling structure, the second rolling structure, the transmission structure, and the blocking structure are provided on the swinging bracket;
the conveying track has a left side and a right side in a horizontal direction, and the swinging bracket, the first rolling structure, the second rolling structure, and the blocking structure are located on the left side;
the transmission structure includes a driving motor, a first transmission shaft, and a cam, the first transmission shaft is connected to the driving motor, the first transmission shaft is perpendicular to the horizontal ground, and the cam is connected to the first transmission shaft; and
when a flange of the cam abuts against a surface of the frame, the swinging bracket swings in the horizontal direction, so that the first rolling structure, the second rolling structure, and the blocking structure move away from the conveying track.

5. The test tube rotating mechanism according to claim 4, wherein
an optical coupling sensor is provided on the frame; and
an optocoupler is provided on a base circle of the cam.

6. The test tube rotating mechanism according to claim 4, wherein
the first rolling structure is connected to the first transmission shaft;
the swinging bracket is provided with a second transmission shaft, the second transmission shaft is parallel to the first transmission shaft, and the second rolling structure is connected to the second transmission shaft; and
the first transmission shaft is provided with a driving pulley, the second transmission shaft is provided with a driven pulley, and the driving pulley and the driven pulley are connected by a first transmission belt.

7. The test tube rotating mechanism according to claim 4, further comprising an elastic structure 7, wherein two ends of the elastic structure are respectively connected to the frame and the swinging bracket.

8. The test tube rotating mechanism according to claim 4, further comprising an auxiliary support, wherein the auxiliary support is located on the right side, the auxiliary support is provided with a fourth rolling structure, and an outer side surface of the fourth rolling structure has a tangent point with the test tube holder.

9. The test tube rotating mechanism according to claim 8, wherein a position sensor probe is provided on the auxiliary support.

10. A production-line sample conveying system, comprising a barcode scanner and the test tube rotating mechanism according to any one of claims 1 to 9.
